# EUROPEAN PATENT APPLICATION

(11) **EP 1 911 611 A1**
(43) Date of publication of application: **16.04.2008**
(21) Application number: 07019905.4
(22) Date of filing: 11.10.2007
(51) Int. Cl.: B60D 1/36, B60D 1/40

(54) **A hitching device**

(30) Priority: 14.10.2006 GB 0620461
(71) Applicant: Webster, John, Derby DE23 6AF (GB)
(72) Inventor: Webster, John Richard, Derby DE23 6AF (GB); Webster, Robert James, Derby DE23 6AF (GB)

(57) **Abstract**

A mechanism to aid the process of connecting a trailer (2) to a vehicle (1), comprising a lever (6) or levers to move and lift the trailer (2) to a position where hitching can be achieved. The device can be manual or externally powered. A mechanism to provide the final lowering function can be incorporated.

## Description

The present invention relates to a device for aiding the connection of a trailer to a vehicle. The connection between a light vehicle such as a car and a trailer such as a caravan, camping or equipment trailer is conventionally achieved via an articulated joint or hitch. This hitch has two halves, one situated at the rear of the vehicle and the other on an extension or draw bar at the front of the trailer. In order to connect the trailer to the vehicle the two parts must first be brought together to allow the hitching process to take place, In the most common 50mm ball type and some other couplings, the trailer half of the hitch must be lowered onto the part at the rear of the vehicle.

Aligning the two parts is a difficult operation, particularly when the trailer is heavy, has a heavy load or is on sloping, irregular or soft ground. The alignment and lifting process requires very accurate vehicle driving probably with an assistant or manual effort to move the trailer to the hitch. It is common for damage to occur to the vehicle or trailer due to reversing too far. Personal injury by excessive pulling, lifting or trapping is also common. Manually moving the trailer generally requires reasonable manual dexterity and strength. The hitching operation could also be seen as a health and safety hazard.

Previous methods of overcoming this difficulty have often relied on methods for moving the trailer via the wheels, such as electric motors to power the main wheels, the small wheel at the front, generally known as the Jockey wheel or an independent wheel which can be temporarily attached for the process. Alternative methods have used a winch attached to either the vehicle or the trailer which can pull the two together. Whilst these devices can work over large distances, the most difficult part is typically when close to the vehicle, when accurate raising and lowering of the trailer hitch and moving of the vehicle must be achieved. Protection plates to protect the rear of the vehicle when impact does occur and angled mirrors to allow improved visibility of the hitch by the driver are also known.

The present invention overcomes the difficulties of this final short distance manoeuvring by providing a simple device to move and/or lift the front of the trailer and/or to align it in preparation for making the connection between vehicle and trailer. The device may be manually powered. Powered versions for the less able operative are also provided.

For a better understanding of the present invention and to understand how the same may be brought into effect, reference will now be made by way of example only to the following drawings in which:
FIG 1 illustrates the basic elements of the vehicle and trailer without the device
FIG 1a is a side view, FIG 1b is a plan view
FIG 2 illustrates the basic elements of one manual embodiment of the device,
FIG 2a showing a side view and FIG 2b is a plan view.
FIG 3 illustrates the basic operation in normal use.
FIG 4 illustrates diagrammatically one embodiment of the one way and control device.
FIG 5 illustrates an alternative mounting and position for the lower rotating joint. FIG 5a showing the general configuration and FIG 5b showing the detail of one embodiment in the attached position. FIG 5c showing the free position.
FIG 6 illustrates a possible embodiment of the lower pivot which uses the vehicle hitch as one element. FIG 6a shows the initial position, FIG 6b shows an intermediate position and FIG 6c shows the final position prior to connection of the two parts of the hitch.
FIG 7 illustrates an embodiment which includes an actuator in order to minimise the effort required by the operator.
FIG 8 illustrates an alternative embodiment incorporating an actuator
FIG 9 illustrates a plan view of a further embodiment incorporating an actuator.

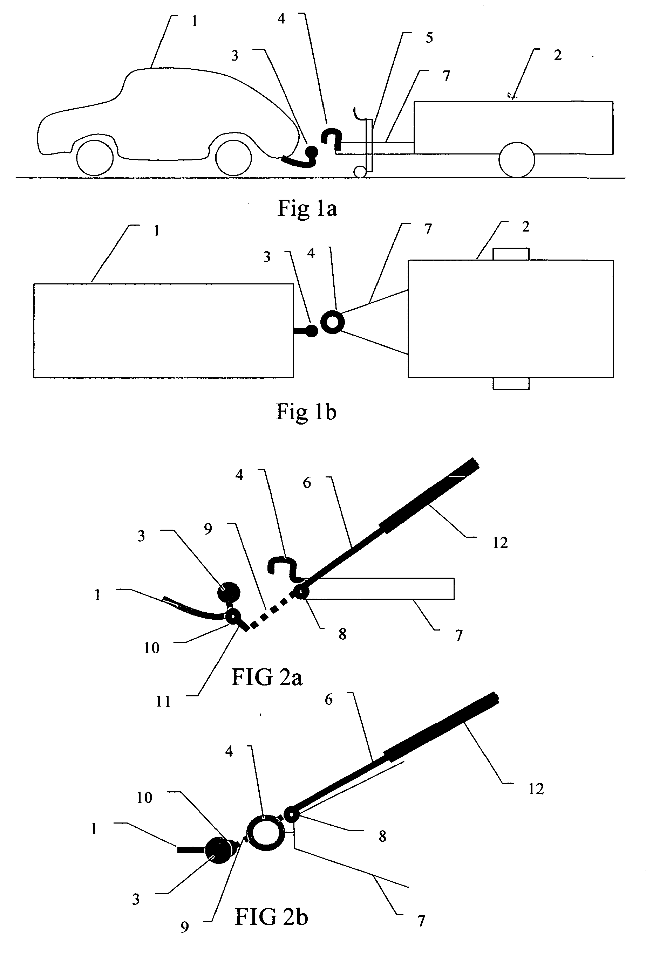

FIG 1 shows the vehicle 1 and trailer 2 which are conventionally connected by hitch parts 3 and 4. The front of the trailer may also be supported and lifted lowered using the jockey wheel and mechanism 5.
FIG 2 shows the basic elements of the device as attached to the vehicle and trailer. The main lever 6 is attached to the trailer draw bar 7 by rotating joint 8. Telescopic beam 9 connects lever 6 to a second rotating joint 10 via offset link 11. In practice, the telescopic beam 9 may extend and travel within main lever 6. Other mechanisms such as a lazy tongue arrangement can also be used to provide a similar effect. Rotating joint 10 joins the offset link 11 to the vehicle or hitch structure 1. Rotating joint 10 is substantially free to rotate in all directions and may consist of a simple hook or chain which passes around the vehicle hitch or be achieved by a two part device, one part of which is attached to the vehicle. Rotating joint 8 has limited rotation to prevent the main mechanism consisting of the main lever 6, telescopic beam 9 offset link 11 and other associated parts from rotating about the longitudinal axis of the main lever 6. It is free to rotate about the other 2 axes. A handle/ grip 12 may be provided to ease operation. The handle 12 may also be adjustably connected to main lever 6 to provide an increase in leverage by increasing the length between rotating joint 8 and the handle 12. This wouild also facilitate easier stowage. Attachment to the vehicle and trailer can be either permanent, via a permanent bracket or fully removable. Other elements are needed, these will be described later.

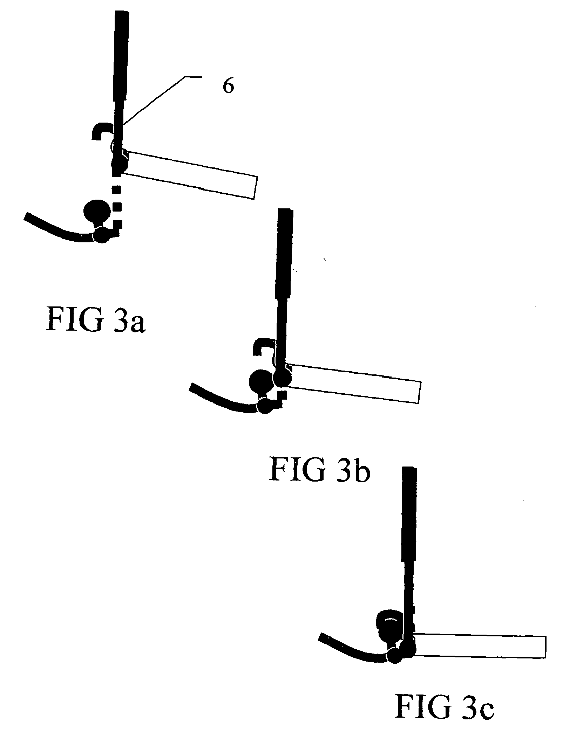

Fig 3 shows the fundamental operation of this embodiment. The vehicle is driven to within a reasonable distance of the trailer and positioned generally as shown in FIG 2. For this embodiment, a maximum distance of around 0.5 metre should be practical.
The device is attached to the vehicle and trailer as shown in FIG 2. The main lever 6 is brought to a position which is closer to vertical as shown in FIG 3a.
A one way mechanism prevents the telescopic beam 9 from extending. Since this reduces the substantially horizontal distance between the two pivots, the trailer must move towards the vehicle hitch. As the main lever 6 approaches a vertical position, the weight of the front of the trailer causes a downwards force which causes the telescopic beam 9 to reduce in length until it reaches an end position as shown in FIG 3b. In practice, the motion towards the positions shown in FIG 3a and 3b is likely to occur concurrently, FIG 3a is shown for illustrative purposes only. Under certain circumstances, such a steep gradients, soft/uneven ground or excessive distances, it may be necessary to lift the main lever 6 more than once, with the trailer braked in between operations. This will allow operation without excessive lifting force by the operator. Under extreme circumstances, a ratcheting effect may be achieved by moving the main lever 6 horizontally to move the trailer and hence reduce the gap prior to final lifting to the vertical position.

The position achieved at FIG.3b positions the two parts of the hitch in a suitable position for hitching. In this case, the appropriate position is vertically above the ball with a suitably small gap. The position is determined substantially by the controlled length of telescopic beam 9, the length of offset link 11, the pre-set angle of rotating joint 8 and the relative positions of the mournings and associated equipment, In this position, the main lever can be held by one hand whilst the other hand is used to prepare the hitch for connection. A trigger within the handle 12 or operated by moving the handle 12 is used to release the telescopic beam 9 allowing the beam to shorten further and the trailer hitch to fall in a controlled manner onto the vehicle part of the hitch. In practice, the stop at the intermediate position shown in FIG 3b and the trigger mechanism may be omitted to provide a lower cost mechanism. The hitch mechanism is closed and hitching is complete. The device can now be removed or stowed ready for towing.

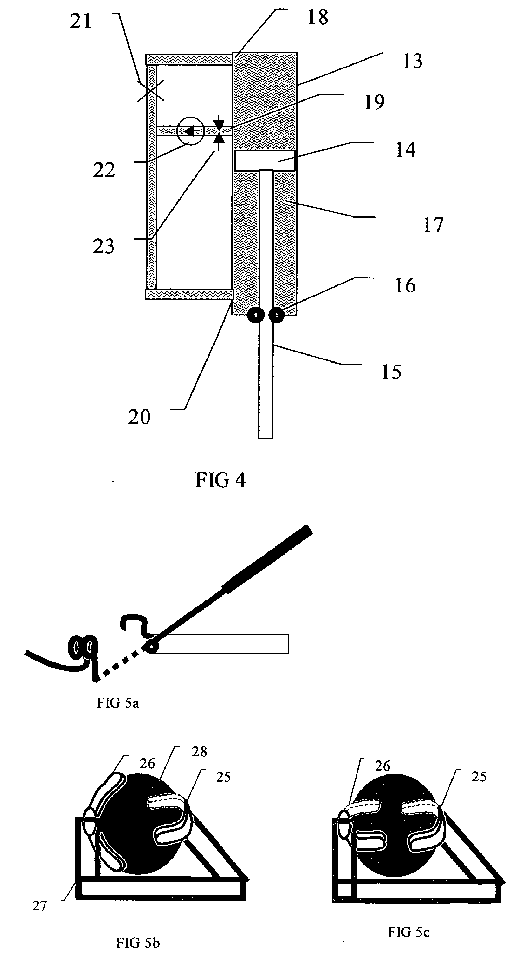

Control of the length of the telescopic beam 9 requires control for three prime operations. These are extension for initial attachment, controlled contraction during lifting of the main lever 6 and final lowering onto the hitch. The initial attachment stage provides easy movement with little resistance whilst the connections are made, The second lifting stage requires controlled movement in one direction (closing) only. A damping effect is also desirable at this stage in order to prevent uncontrolled rapid movements. At the end of this stage, a temporary blocked position is reached to allow preparation for the final hitching. The third stage requires removal of this temporary block to allow the hitch to drop into position. Again, damping is desirable. Many mechanisms will be obvious to someone skilled in the art. These will include ratchet, wedging, friction damping and catch mechanisms. One embodiment using a hydraulic system is shown in FIG 4. FIG 4 shows the main parts and consists of a cylinder 13 and piston 14 which is connected to telescopic beam 9 via rod 15 which passes into the cylinder via seal 16. The main system may be housed within main lever 6. Operating fluid 17 may travel in and out of the cylinder via ports 18,19 and 20. The ports are all connected as shown via the normally closed manual valve 21, the one way valve 22 and flow restrictor 23.

During attachment of the device to the vehicle and trailer, the manual valve 21 is opened to allow fluid to flow freely between either side of the piston via ports 18 and 20. The piston 14 can be easily moved allowing the length of rod 15 protruding from the cylinder 13 to be changed. Once attached, the manual valve is released and allowed to close under spring pressure. Fluid can now only flow from port 19 to port 20 via restrictor 23 and one way valve 22. The restrictor 23 provides a damping function, to slow the movement of the telescopic beam 9. One way valve 22 only allows fluid to flow from port 19 to port 20, thus restricting movement of the piston 14 and rod 15 to move the rod 15 further into the cylinder. When the piston 14 reaches port 19 it blocks port 19 preventing further movement. This position corresponds to the overall mechanism position shown in FIG 3b. When ready to further lower the trailer hitch 4, the manual valve 21 is opened to allow fluid to flow from port 18 to port 20 and hence free movement of the piston to allow lowering to the position shown in FIG 3c. A flow restrictor may also be incorporated with the valve to provide control of the movement.

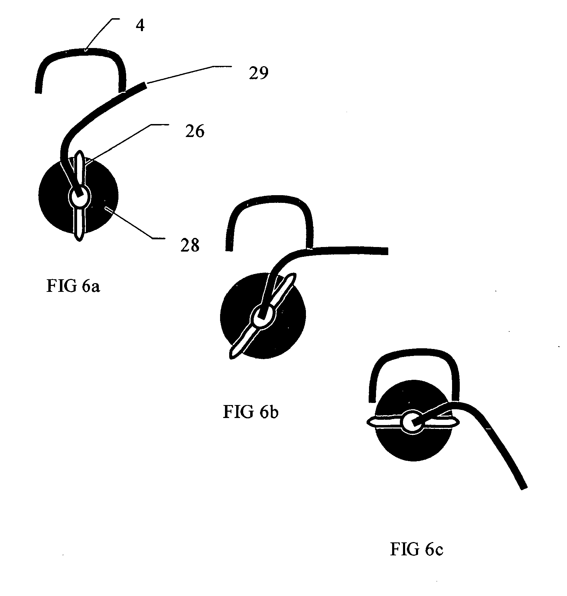

It is anticipated that in many cases, a special bracket will need attachment to the trailer at the rotating joint 8. It is not attractive to require additional brackets to be attached to the vehicle, so that the device can be used with multiple vehicles. Figure 5 shows an alternative arrangement which uses the vehicle hitch as part of the lower rotating joint. A 50mm ball hitch is used for this illustration. FIG 5a shows the general configuration. The system is generally as shown in FIG 2, except that the rotating joint 8 is replaced by a temporary ball coupling 24. The lowering mechanism now has the second stage final lowering mechanism described previously removed and minor geometry changes are also necessary. One embodiment of the temporary ball coupling is shown in FIG 5b and FIG 5c. The support structure 27 is attached to the offset link 11, which is angled or shaped relative to the horizontal in this embodiment in order to allow clearance for the hitching device, the trailer 2 and the vehicle 1 to move relative to each other. The fixed yoke 25 is rigidly attached to the support structure 27. A rotatable yoke 26 is also attached to the support structure 27 but can rotate in a controllable manner as shown between FIG 5b and FIG 5c. During the lifting and trailer moving part of the process, substantially as shown in FIG 3a and. FIG3b, the rotatable yoke 26 is positioned as shown in FIG 5b. In this position, the hitching device is securely attached to the ball hitch 28. Upon reaching the position as substantially shown in FIG 3b, the rotatable yoke 26 is rotated to the position shown in FIG 5c. This still provides horizontal location, but allows the device and hence the front of the trailer to fall so that hitching can be completed. As before, rotation of the rotatable yoke may be controlled either manually or by a mechanism which operates when telescopic beam 9 reaches a pre-set effective length or by a mechanism which detects the position of a part of the hitch. One embodiment of this could consist of a simple lever mechanism as shown in FIG 6.

A spring (not shown) is pre-loaded to provide an anticlockwise turning moment which will return the rotatable yoke 26 to the position shown in FIG 6a. A lever 29 is attached to the rotatable yoke 26 such that it can turn the yoke in a clockwise direction. The lever is shaped such that in a vertical position just before the final hitching process, the lever contacts either the trailer part of the hitch 4 or a suitable part on the hitching device, directly or indirectly attached to the main lever 6. The first of these options is shown in FIG 6. Upon contact, the hitch 4 exerts a force which causes a clockwise turning moment on the rotatable yoke 26. This causes the yoke to turn as shown in FIG 6b and FIG 6c. At or before the position achieved in FIG 6c, the two yokes 26 and 25 are aligned such that they are no longer constrained vertically by the ball 28. At this point, the front of the trailer and the hitching device will drop under the weight of the front of the trailer, from where the hitching process can be completed by closing the hitch, It is clear that similar functionality can be achieved by many other mechanisms. The basic functionality is an integral part of this embodiment of the invention. It is required to locate on the ball during the first parts of the operation prior to manual or automatic release once an appropriate position has been achieved.

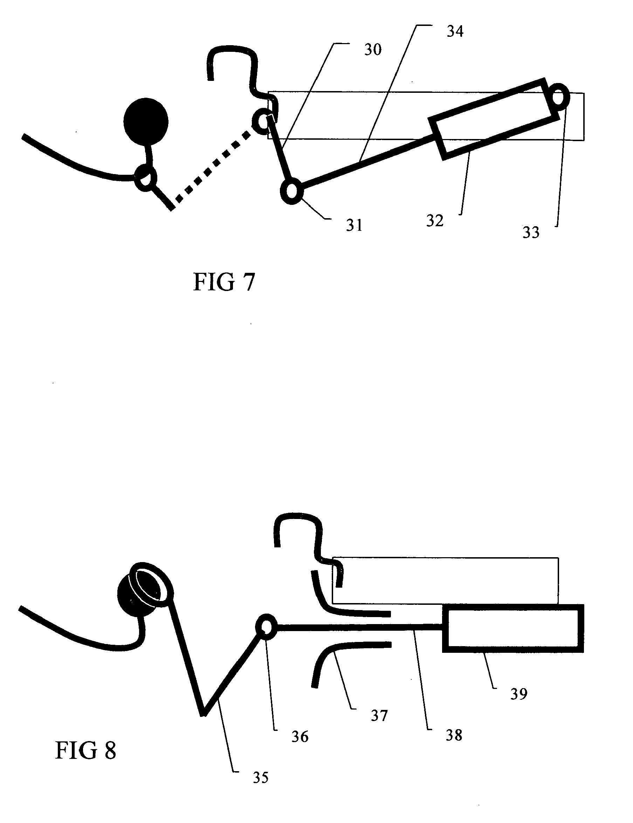

Within the same principal of operation, enhanced versions of the hitching device may be powered by several means such as electrical or hydraulic systems. FIG 7 shows a simplified version using mechanism similar to that shown in FIG 2, but now has a shortened and repositioned main lever 30 which connects to pull rod 34 via rotating joint 31. Hydraulic cylinder 32. is attached to the trailer via joint 33 and pulls on joint 31 in order to operate the hitching device substantially the same as shown in FIG 3. It will be appreciated that many actuators such as an electric motor and ball screw which would be known to someone skilled in the art could be used in place of the hydraulic cylinder 32. Any of the actuators discussed here could also be replaced by a manual device with high gearing to provide movement with minimum effort.

Alternative lever arrangements lend themselves to powered operation, such as the cranked lever and actuator mechanism shown in FIG 8. Shaped link 35 is connected to operating rod 38 via joint 36. Joint 36 is arranged to allow bending between link 35 and rod 38, but will not allow rotation about either main axis of these two parts. In operation, the actuator 39 pulls the rod 38 and hence moves the trailer closer to the towing vehicle. Movement is sustained until link 35 contacts guide 37. Guide 37 causes the joint 36 to bend, thus continuing to move the trailer and to lift it to a suitable height for hitching. This continues until rod 38 and link 35 are substantially parallel and can move inside guide 37. Movement of the trailer can now continue until the two part of the hitch are in a suitable position for connection. It should be noted that a ball hitch is shown here, but others could also be used.

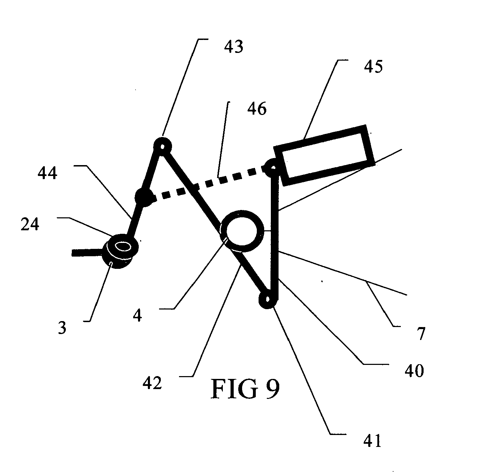

A further embodiment is shown in FIG 9. A link 40 is rigidly attached to the trailer. Link 42 is attached to link 40 via joint 41. Link 44 is attached to link 42 via hinge 43 which allows movement of link 44 substantially in the same plane as link 42. Link 42 is free to rotate about its own axis so that coupling 24 moves vertically. In operation, link 44 is pulled towards actuator 45 via link 46. This may be conveniently achieved by a motor and lead screw arrangement. This pulls the mechanism and hence the trailer closer to coupling 24. As links 40 and 42 approach each other, contact between links 41 and 42 or other devices attached to the mechanism causes rotation of link42 about it's own axis, causing a downwards force on coupling 24 hence lifting the trailer. When shortening of link 46 is complete, the trailer is moved to a vertical and horizontal position such that hitching can be completed by releasing coupling 24.

Whilst endeavouring in the foregoing specification to draw attention to those features of the invention believed to be of particular importance, it should be understood that the applicant claims protection in respect of any patentable feature or combination of features hereinbefore referred to and /or shown in the drawings whether or not particular emphasis has been placed thereon.

## Claims

1. A device to assist in the operation of aligning a vehicle and trailer to allow easier coupling of the trailer to the vehicle,
**characterised in that** an extensible member is substantially rotatably attached to the vehicle and trailer, positioning of the vehicle and trailer for hitching being achieved by an effective rotation or change in effective length of the extensible member.

2. A hitching device according to claim 1 **characterised in that** a first member is rotatably attached to the trailer or vehicle and a second member comprising an arrangement to allow rotation in two planes whilst restricting movement in the third rotational frames of reference attached to the other one of the trailer or vehicle, the first and second members being extensibly connected such that when the device is rotated from a first to a second position the vehicle and trailer are moved relative to each other to a position where a subsequent operation provides the final movement to complete the hitching process.

3. A hitching device according to claim 1 or 2 where an extensible member connecting the first and second members is first positioned in an operationally horizontal or shallow angled position to allow the connections to be made, movement of the extensible member to a substantially vertical operational position changes the relative position of the vehicle and trailer to align the trailer hitch components substantially vertically above the vehicle hitch component, shortening of the extensible member reducing the height to which the hitch element of the trailer must be lifted.

4. A hitching device according to claim 3 where compression of the extensible member is stopped in a position where it can be held whilst the hitch elements are prepared for hitching by a blocking device, the blocking device being released to allow the final substantially vertically down movement of the trailer part of the hitch to allow completion of the hitching process.

5. A hitching device according to claim 3 or 4 where movement of the vehicle and trailer away from each other is prevented by a one way device which allows compression and prevents extension of the extensible member during operation.

6. A hitching device according to any previous claim where connection to the vehicle is achieved via the ball part of the hitch which is attached to the vehicle, final lowering of the trailer part of the hitch being achieved by releasing the connection to the ball part of the hitch allowing the trailer part of the hitch to fall onto the ball.

7. A hitching device according to any previous claim where an effective extension of the extensible member is provided to give increased leverage, allowing easy manual movement.

8. A hitching device according to claim 7 where the lever can change effective length to allow more leverage to be obtained whilst still allowing clearance for it to move around obstacles such as parts of the vehicle or trailer.

9. A hitching device according to claim 1 where the extensible member remains and moves substantially horizontally within guides which control the relative position of the vehicle and trailer as the extensible member is functionally shortened.
